(19) Europäisches Patentamt / European Patent Office / Office européen des brevets

(11) **EP 2 541 948 B1**

(12) **EUROPEAN PATENT SPECIFICATION**

(45) Date of publication and mention
of the grant of the patent:
**13.03.2019 Bulletin 2019/11**

(51) Int Cl.:
***H04N 13/341*** *(2018.01)*

(21) Application number: **11190640.0**

(22) Date of filing: **24.11.2011**

(54) **Stereoscopic image display method and display timing controller**

Stereoskopisches Bildanzeigeverfahren und Anzeigezeitgeber

Procédé d'affichage d'images stéréoscopiques et contrôleur temporel d'affichage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011 TW 100123015**

(43) Date of publication of application:
**02.01.2013 Bulletin 2013/01**

(73) Proprietor: **Acer Incorporated
Taipei Hsien 221 (TW)**

(72) Inventor: **Ko, Chueh-Pin
211 Taipei (TW)**

(74) Representative: **Michalski Hüttermann & Partner
Patentanwälte mbB
Speditionstraße 21
40221 Düsseldorf (DE)**

(56) References cited:
**JP-A- 8 331 599      US-A1- 2011 149 182**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## CROSS REFERENCE TO RELATED APPLICATIONS

This Application claims priority of Taiwan Patent Application No. 100123015, filed on June 30, 2011.

## BACKGROUND OF THE INVENTION

## Field of the Invention

The present invention relates to stereoscopic image display technologies, and in particular relates to a stereoscopic image display apparatus and method using a common state.

## Description of the Related Art

The three-dimensional (3D) vision is generated due to slight differences of the human eyes when observing an object, which is regarded as "parallax". That is, the human brain reads the parallax from the eyes to distinguish the distance of the object, thereby generating stereoscopic vision. Various stereoscopic display technologies have been developed based on the concept, where these technologies can be classified into two types: with glasses or naked eyes. When a user needs to wear a pair of specific glasses to watch three-dimensional stereoscopic films, the glasses can be classified as an active type or a passive type based on its operating mode.

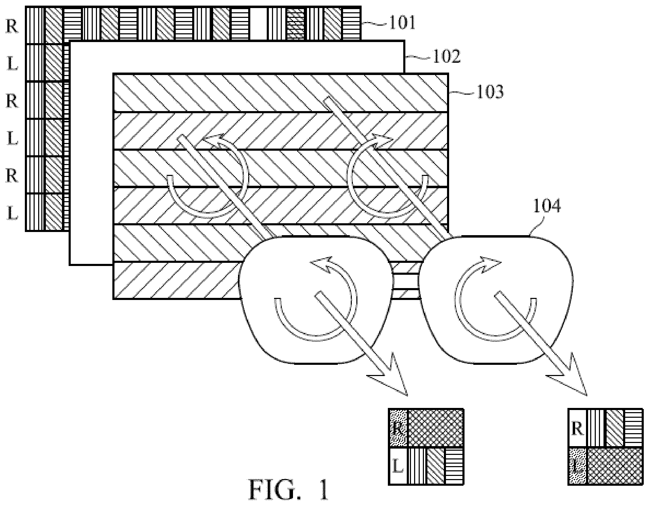

The passive stereoscopic glasses can also be classified as anaglyph stereoscopic glasses or passive polarization stereoscopic glasses. There is a polarization sheet on the left eyeglass lens and the right eyeglass lens of the passive polarization stereoscopic glasses to filter the light moving toward different directions. Thereby, the light moving with the same direction of the polarization sheet can pass through by blocking the light perpendicular to the polarization sheet. A corresponding polarization stereoscopic display apparatus is also required when using passive polarization stereoscopic glasses. The polarization stereoscopic image display apparatus, such as an LCD, is capable of using a two liquid crystal panel to display vertical and horizontal polarized images. However, there may be a higher cost with this apparatus. Generally, horizontal polarization sheets and vertical polarization sheets are placed in odd lines and even lines, respectively, in an interleaved fashion, where horizontal and vertical polarization sheets respectively use pixels of a half image with patterned retarders for performing phase delay, thereby polarizing the odd lines and even lines respectively to generate stereoscopic vision. Costs are lower with polarization sheets and patterned retarders. However, the resolutions (horizontal resolution or vertical resolution) observed by the left eye or the right eye are halved, as illustrated in FIG. 1, wherein an active polarizer 102 and a patterned retarder 103 are placed in front of the liquid display panel 101. The left eyeglass lens of the polarization stereoscopic glasses 104 receives a left-eye image with only even lines with counterclockwise circular polarization, and the right eyeglass lens of the polarization stereoscopic glasses 104 receives a right-eye image with only odd lines with clockwise circular polarization.

The stereoscopic television system with active shutter glasses can be applied to plasma TV, LCD, or DLP back projection TV, which requires corresponding shutter glasses to synchronize with the displayed TV signals, thereby viewing corresponding stereoscopic images correctly. However, shutter glasses cost more. When watching stereoscopic films with an active polarized stereoscopic TV, each frame has full resolution for both the left eye and the right eye. However, the left-eye image and the right-eye image are displayed alternately, and thus the frame rate of the left/right eye is only half of the original frame rate, thereby causing flickers in response to switching of the shutter glasses.

Conventional stereoscopic image processing technologies regard a stereoscopic image as an independent left-eye/right-eye image signal, and display the stereoscopic image as an independent left-eye/right-eye image to achieve stereoscopic vision. This way may be simple; however, and it will cause flickers by the shutter glasses or reduced resolution observed by the polarization glasses. This is because all design concepts of prior technologies are based on two conditions: the left-eye image and the right-eye image.

US 2011/149182 A1 describes a pair of liquid crystal shutter glasses including a first liquid crystal shutter and a second liquid crystal shutter. The first and second liquid crystal shutters are switched to a transmissive state by turns. The respective first and second liquid crystal shutters include a first electrode substrate and a second electrode substrate opposing the first electrode substrate. An OCB (Optically Compensated Bend) mode liquid crystal layer is held between the first and second electrode substrates.

JP 8 331599 A describes a CPU discriminating whether or not a video signal received at present is a time division stereoscopic video image when the set display mode is the 2D display mode or the 2D/3D display mode.

## BRIEF SUMMARY OF THE INVENTION

The invention is defined by the features of the independent claims. Preferred embodiments are defined in the dependent claims.

A detailed description is given in the following embodiments with reference to the accompanying drawings.

## BRIEF DESCRIPTION OF THE DRAWINGS

The present invention can be more fully understood by reading the subsequent detailed description and examples with references made to the accompanying drawings, wherein:

FIG. 1 illustrates a diagram of a conventional stereoscopic liquid crystal display apparatus and polarization glasses.

FIG. 2A illustrates a diagram of the common state generator according to an embodiment of the invention.

FIG. 2B and 2C illustrate a diagram of the common state generator for determining the state for different image sources according to an embodiment of the invention.

FIG. 3A and 3C illustrate a diagram of the common state generator for calculating identical images according to an embodiment of the invention.

FIG. 3C and 3D illustrate a diagram of the common state generator for calculating whether continuous images are identical images according to another embodiment of the invention.

FIG. 3E, 3F, 3G, and 3H illustrate a diagram of using different blocks to represent the common state according to an embodiment of the invention.

FIG. 4 illustrates a flow chart of the common state generator for applying different image profiles for different images according to an embodiment of the invention.

FIG. 5 illustrates a block diagram of the stereoscopic image display apparatus according to an embodiment of the invention.

FIG. 6A and 6B illustrate a diagram of the predetermined display order of the stereoscopic image display apparatus with a pair of shutter glasses according to an embodiment of the invention.

FIG. 6C illustrates a diagram of the predetermined display order of the stereoscopic image display apparatus with a pair of polarization glasses according to another embodiment of the invention

FIG. 6D illustrates a diagram of the predetermined display order of the naked-eye stereoscopic image display apparatus according to an embodiment of the invention.

FIG. 7 illustrates a flow chart of the stereoscopic image display method according to an embodiment of the invention.

**DETAILED DESCRIPTION OF THE INVENTION**

The following description is of the best-contemplated mode of carrying out the invention. This description is made for the purpose of illustrating the general principles of the invention and should not be taken in a limiting sense. The scope of the invention is best determined by reference to the appended claims.

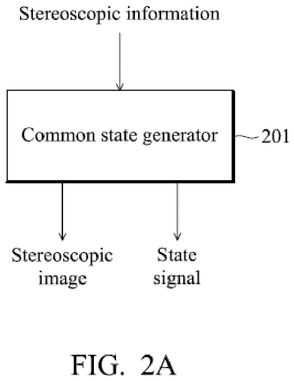

Conventional three-dimensional stereoscopic technologies merely define the left-eye image and the right-eye image. However, there are slight differences of the left-eye image and the right-eye image when an object is observed by human eyes. In other words, some objects look identical in the left-eye image and the right-eye image. A concept of "common sub-image" is provided in the invention and existing active/passive polarization stereoscopic image display apparatuses can be improved based on the concept. FIG. 2A illustrates a block diagram of the common state generator 201 according to an embodiment of the invention, wherein the stereoscopic image information can be any source with stereoscopic information, such as three-dimensional films (e.g. 2D images and corresponding depth images) processed from the two-dimensional films, three-dimensional films (i.e. already with left-eye images and right-eye images) captured by a three-dimensional stereoscopic camera, files with three-dimensional information in MVC format of the Blu-ray format, or sources of two-dimensional images with corresponding depth information to display three-dimensional information. The output stereoscopic image generated by the common state generator 201 comprises a left-eye image, a right-eye image and a common sub-image. The state signal may indicate state 1, state 2 and state 3, wherein the states 1-3 define the left-eye image, the right-eye image, and the common sub-image, respectively. The common part in both the left-eye image and the right-eye image is regarded as a common sub-image, where the common sub-image can be displayed in both two eyes simultaneously. The quality, brightness and the resolution of the stereoscopic images can be improved by the common sub-image, and the fatigue of the audience caused by flickers of the stereoscopic images can also be avoided.

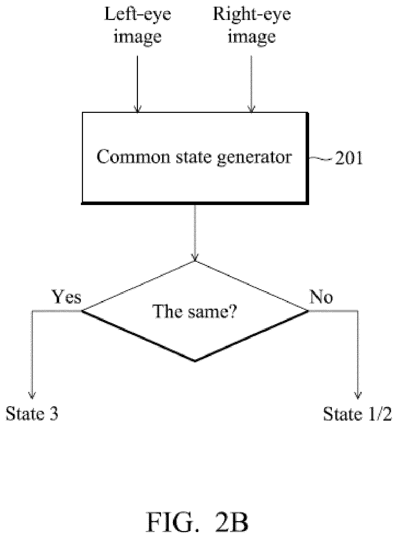

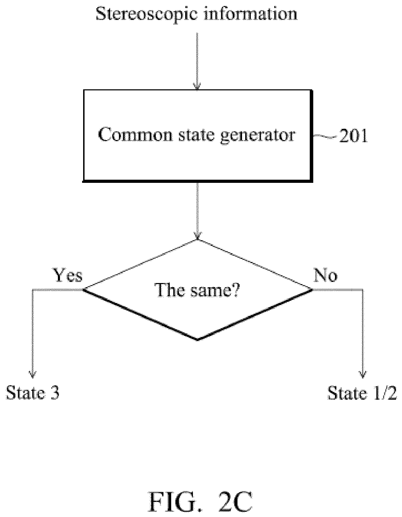

When the stereoscopic image information passes through the common state generator 201, the stereoscopic image comprising a left-eye image, a right-eye image or a common sub-image, is obtained as well as the corresponding state signal. FIGs. 2B and 2C illustrate a diagram of the common state generator 201 according to an embodiment of the invention. As illustrated in FIG. 2B, if the stereoscopic image information received by the common state generator 201 is the left-eye image and the right-eye image captured by a three-dimensional stereoscopic camera, the common state generator will determine whether the left-eye image is identical to the right-eye image. If so, the output state signal indicates state 3. Otherwise, the output state signal indicates state 1 (i.e. left-eye image) or state 2 (i.e. right-eye image). As illustrated in FIG. 2C, if the stereoscopic image information received by the common state generator 201 is a multi-view information or two-dimensional images with corresponding depth information, the common state generator 201 will determine whether the generated left-eye image is identical to the generated right-eye image. If so, the output state signal indicates state 3. Otherwise, the output state signal indicates state 1 (i.e. for the left-eye image) or state 2 (i.e. for the right-eye image). In an embodiment, the common state generator 201 can be software executed by a personal computer, a scalar in a display, a timing controller (i.e. T-CON) in a display panel, or firmware of a display unit, but the invention is not limited thereto. The stereoscopic image generated by the common state generator 201 can be the received stereoscopic image bypassed, or the stereoscopic image generated by conventional stereoscopic image conversion technologies.

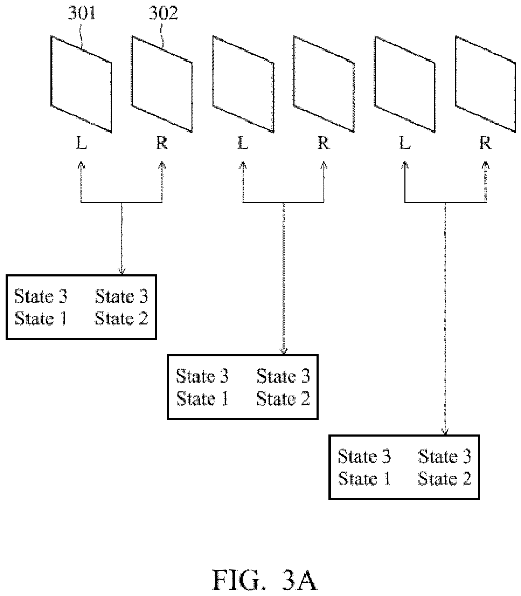

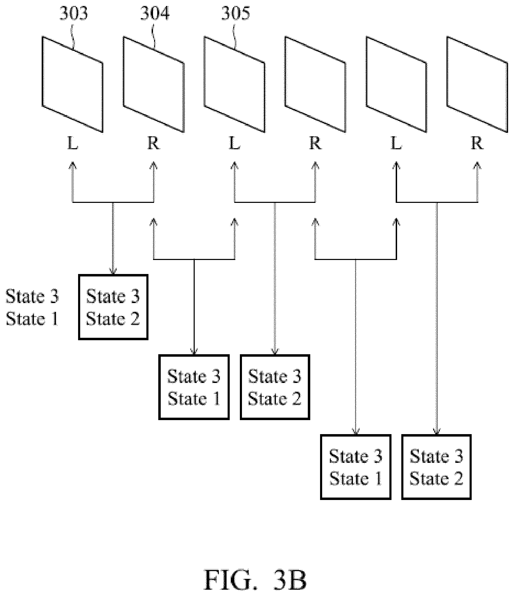

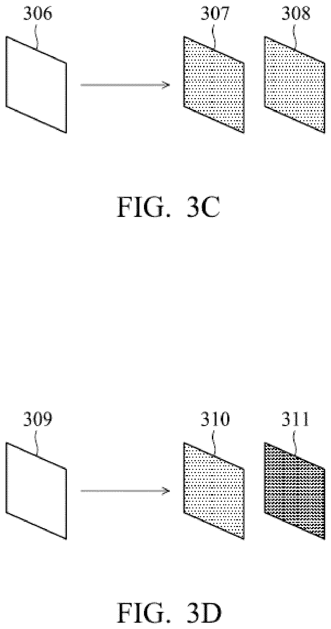

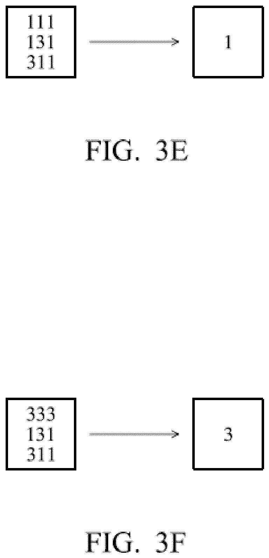

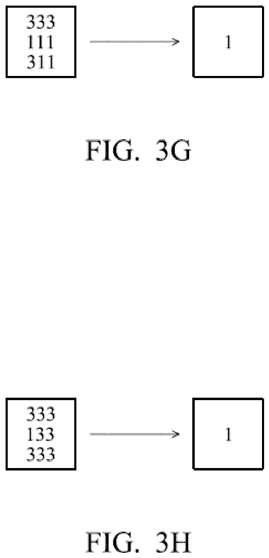

The common state generator 201 can perform individual image processing to different stereoscopic image sources, but the common state generator 201 is designed to find the common part of the left-eye image (i.e. state 1) and the right-eye image (i.e. state 2). FIGs 3A~3D illustrate a diagram of the algorithm of the common state generator 201 according to an embodiment of the invention. In an embodiment, as illustrated in FIG. 3A, the common state generator 201 is capable of calculating whether the left-eye image is close to the right-eye image. For example, under the conditions: a) the absolute value of the difference of the luminance of pixels in the left-eye image 301 and the right-eye image 302 is less than 10; b) the luminance of pixels in the left-eye image and the right-eye image is less than 5; or c) the color difference (i.e. DeltaE) in pixels of the left-eye image and the right-eye image is less than 1, the common state generator 201 will determine that there are pixels of state 3 in the stereoscopic image pair comprising the left-eye image 301 and the right-eye image 302, wherein the calculated values in conditions a) to c) can be regarded as feature values of the left-eye image 301 and the right-eye 302. In another embodiment, as illustrated in FIG. 3B, the common state generator 201 is further capable of calculating whether each two continuous images (i.e. an adjacent left-eye image and right-eye image) are close to each other, such as the left-eye image 303 and the right-eye image 304, or the right-eye image 304 and the left-eye image 305. For example, under the conditions: d) the absolute value of the difference of the luminance of pixels in the prior image and the later image 302 is less than 10; e) the luminance of pixels in the prior image and the later image is less than 5; or f) the color difference (i.e. DeltaE) in pixels of the prior image and the later image is less than 1, the common state generator 201 will determine that there are pixels of state 3 in the stereoscopic image pair comprising the prior image and the later image, wherein the calculated values in conditions d) to f) can be regarded as feature values of the left-eye image 301 and the right-eye 302. In yet another embodiment, the common state generator 201 is further capable of calculating the variance of luminance in several continuous images to determine whether there is a common sub-image of state 3 in the continuous images. As illustrated in FIG. 3C, the variance of luminance in the image 307 and 308 is 6, the common state generator 201 can determine whether the summation of the variances of luminance in these three continuous images is less than a predetermined value (e.g. 10) to determine whether the pixel in the image 306 is in state 3. As illustrated in FIG. 3D, the variance of luminance values of pixels of the image 309 and 310 is 6, and the variance of luminance values of pixels of the image 310 and 311 is 6. The common state generator 201 may determine whether the pixel in the image 309 is a state 1 image, as well as determine whether the summation of the variances of three continuous images is larger than a predetermined value (e.g. 10). The common sub-image with state 3 can be retrieved according to the aforementioned method, wherein the condition of each pixel can be replaced by a condition of each block. That is, each block has a plurality of pixels, and the condition of each block can be substituted with a presentation value. For example, the condition of the block can mainly follow with the condition of majority of pixels, as illustrated in FIG 3E and 3F. Also, the condition of the block can be mainly with the condition of the center of the block, as illustrated in FIG. 3G. Alternatively, the condition of the block is 1 when any condition value of the block is 1, as illustrated in FIG. 3H. In summary, there are only pixels or blocks with state 3 in the common sub-image.

The stereoscopic image information received by the common state generator 201 can be two-dimensional images with corresponding depth information or the MVC format for three-dimensional content of a Blu-ray disc, wherein the two-dimensional images and the corresponding depth information can be generated by a depth camera. In this embodiment, the two-dimensional images and the corresponding depth information (or the MVC format) can be converted into stereoscopic images based on left-eye images and right-eye images, and the generated stereoscopic information can be calculated by a specific algorithm (i.e. introduced later) to obtain the corresponding state information. In another embodiment, the common state generator 201 can define the regions with a specific depth value as state 3. For example, the objects observed by the left-eye and the right eye for a specific depth from the screen almost have no differences, and thus the regions of a specific depth value or within a specific depth range can be defined as state 3, and the remaining regions can be defined as state 1 or state 2 based on the left-eye image or the right-eye image. For example, if luminance values 0 to 255 are used to represent different depths in a depth image, the specific depth range for state 3 can be defined as luminance 0 to 10, 120 to 135, or 233 to 255, and the remaining luminance pixels can be defined as state 1 or state 2 based on the left-eye image or the right-eye image.

The aforementioned embodiment is to describe all of the left-eye image or the right-eye image being at state 3. In yet another embodiment, the common state generator 201 can further calculate the intersection (i.e. the common part) between the left-eye image and the right-eye image; namely, a common sub-image. The expanded stereoscopic image can be represented by the following formula:

$$Frame\{L,R\} \rightarrow Frame\{L^*, S, R^*\}$$

& property(Frame)=StateX, wherein X=1~3; wherein the left-eye image corresponds to state 1; the right-eye image corresponds to state 2; and the common sub-image corresponds to state 3. It should be noted that the common state generator 201 is further capable of outputting the corresponding state signal of each image to control the panel and the active light control layer in a stereoscopic display. In an embodiment, taking the left-eye image for example, the image L* can be a pure left-eye image, the generated left-eye image, or the optimized left-eye image, wherein the generated left-eye image is the left-eye image after stereoscopic image processing, and the "pure left-eye image" represents the sub-image of objects merely appearing in the left-eye image, and the optimized left-eye image represents the left-eye image enhanced by image processing for different scenes to obtain better visual effects. The common sub-image can be represented by the following formula:

$$S = (L^* \cap R^*);$$

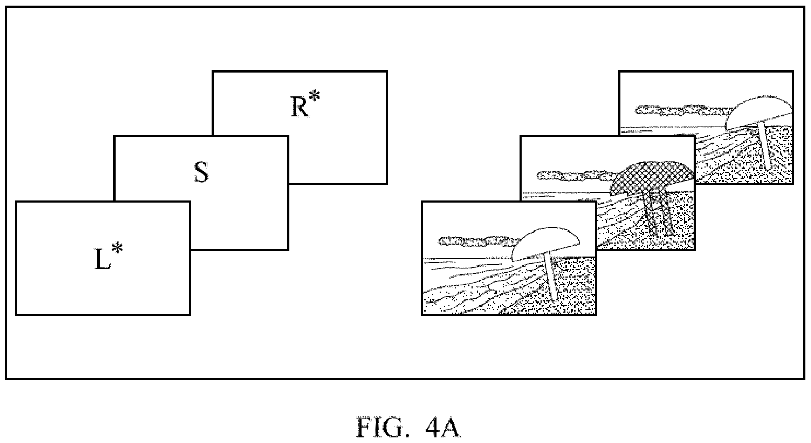

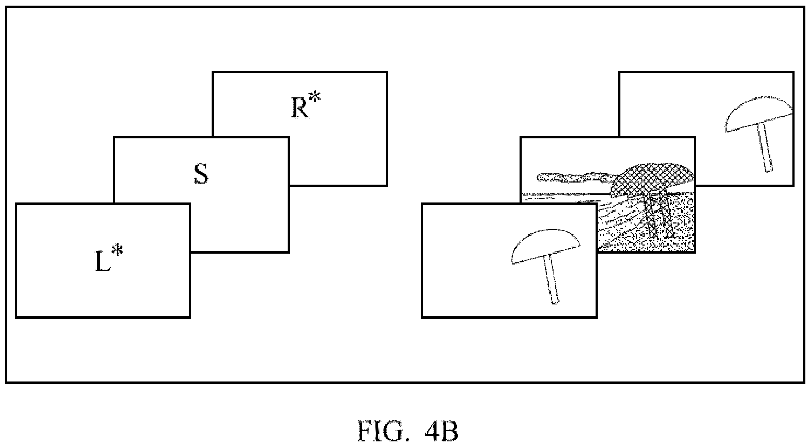

wherein S represents the common sub-image; L* can be a pure left-eye image, a generated left-eye image or the optimized left-eye image; and R* can be a pure right-eye image, a generated right-eye image or the optimized right-eye image. The images L* and R* should be paired. For example, when the image L* is an optimized left-eye image, the image R* should be the optimized right-eye image. For the remaining regions other than the intersection region between the images L* and R* (i.e. the regions other than the common sub-image) compensation can be by a black screen, a white screen or other images which can improved image quality, such as the optimized left-eye/right-eye image or the image including a specific ratio of the common sub-image (i.e. the ratio of the common sub-image is less than 50% in the image). As illustrated in FIG 4A and 4B, there are different ways to calculate the image L*, the image R* and the corresponding common sub-image S in the invention, wherein the images L* and R* in FIG. 4A are the generated left-eye image and the generated right-eye image, respectively. The images L* and R* in FIG. 4B are the pure left-eye image and the pure right-eye image, respectively.

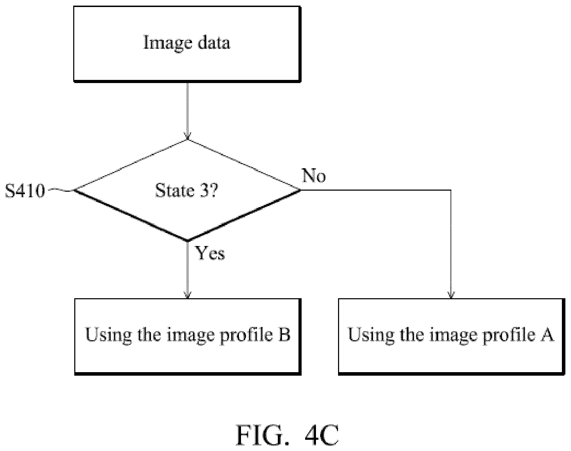

In another embodiment, the left-eye image, the right-eye image and the common sub-image with states 1~3 can be adjusted, respectively. For example, the common state generator 201 may use an image profile A to increase the contrast and saturation of state 1 and 2, as well as decrease the overall brightness. The common state generator 201 may use an image profile B to increase the brightness of state 3, wherein the procedure can be referred to FIG. 4C. In step S410, the common state generator 201 determines whether the image is state 3. If so, the image profile B is used. Otherwise, the image profile A is used. That is, the detection results of different states of the images can be used to apply corresponding image profiles to the images, respectively, to alternate the pixel values in the left-eye image, the right-eye image and the common sub-image by image processing, wherein the image processing in the image profile A and B includes adjusting at least one of the brightness, contrast, gamma, saturation, and the skin color of the corresponding regions in the left-eye image, the right-eye image and the common sub-image with state 1-3, but the invention is not limited thereto.

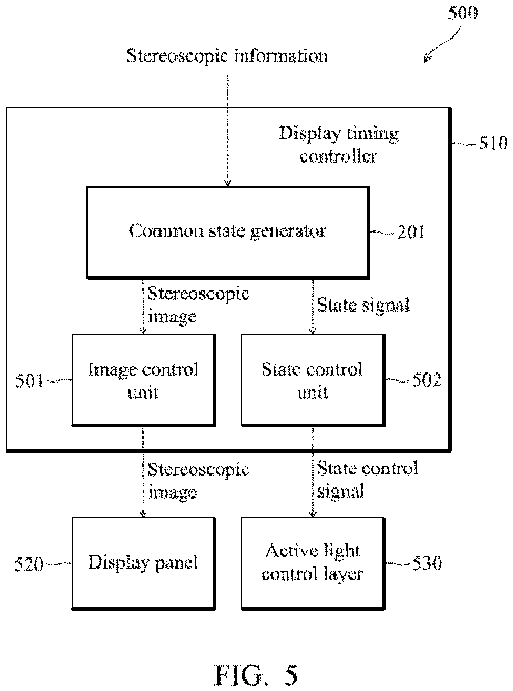

FIG. 5 illustrates a block diagram of the stereoscopic image display apparatus 500 according to an embodiment of the invention. The stereoscopic image display apparatus 500 may comprise a common state generator 201, an image control unit 501, a state control unit 502, a display panel 520, and an active light control layer 530. When the common state generator 201 calculates each left-eye image, right-eye image and common sub-image, the stereoscopic image can be outputted. The common state generator 201 may further control the display order of the left-eye image, the right-eye image and the common sub-image, and output the generated stereoscopic image to the display panel 520. In addition, the common state generator 201 may further control some components (e.g. the active light control layer 530) to perform corresponding control of the stereoscopic image in different states, wherein detailed description thereof is in the following section. In an embodiment, the display timing controller 510 comprising the common state generator 201, the image control unit 501, and the state control unit 502 can be software executed in a personal computer, a scalar in a display, a timing controller (T-CON), or firmware of a display unit, but the invention is not limited thereto.

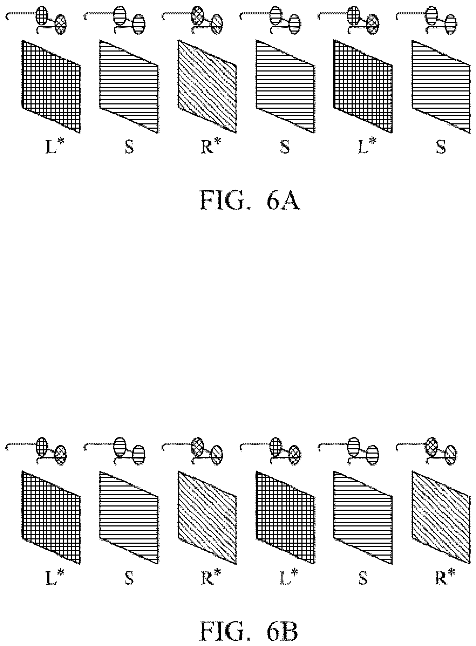

In an embodiment, as illustrated in FIG. 6A, the display frequency of the left-eye image and the right-eye image is 60Hz (i.e. in NTSC format). When the active shutter glasses is used, the predetermined display order displayed by the stereoscopic image display apparatus 500 can be L*→S→R*→S. That is, a common sub-image is inserted into the original display order after each left-eye image and each right-eye image, when the display frequency of the stereoscopic image display apparatus 500 is 240Hz in an NTSC format and 200Hz in a PAL format, respectively, in order to display the output stereoscopic images with twice the amount of data simultaneously. In another embodiment, as illustrated in FIG. 6B, the predetermined display order displayed by the stereoscopic image display apparatus can be L*→S→R*. That is, a common sub-image is inserted into the original display order after a left-eye image and before a subsequent right-eye image, where the display frequency of the stereoscopic image display apparatus 500 is 180Hz in an NTSC format and 150Hz in a PAL format, respectively, in order to display the output stereoscopic image with 1.5 times the amount of data simultaneously. In the aforementioned embodiments, the operation of the shutter glasses is to close the right-eye glass and close the left-eye glass for state 1 and state 2, respectively. However, for the images in state 3, the shutter glasses may have a condition of "both eyeglass lenses activated". That is, the left eyeglass lens and the right eyeglass lens are activated simultaneously to observe the common sub-image by two eyes, thereby increasing image quality.

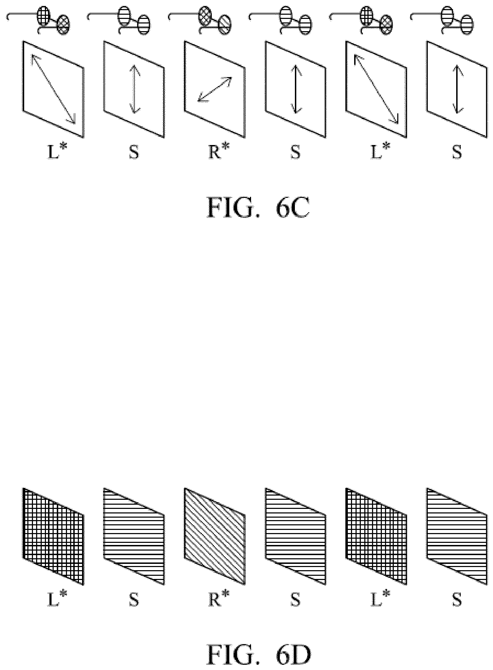

In yet another embodiment, as illustrated in FIG. 6C, the predetermined display order of the active light control layer 530 of the stereoscopic image display apparatus 500 may be $L^* \to S \to R^* \to S$, or $L^* \to S \to R^*$, wherein the active light control layer 530 is at state 1, state 2 and state 3 according to the corresponding state signal of the left-eye image, the right-eye image and the common sub-image. The active light control layer 530 can be an active light polarizer, an active lens, or an active light directional layer. In another embodiment, when the active light polarizer is used with a pair of polarization glasses (i.e. comprising a left eyeglass lens and a right eyeglass lens), the predetermined display order of the stereoscopic image display apparatus can be $L^* \to S \to R^* \to S$, or $L^* \to S \to R^*$. The stereoscopic image display apparatus 500 comprises a state control unit 502 to control the active polarizer. When receiving the state signal indicating state 3, the state control unit 502 may adjust the active polarizer to an intermediate angle between the left-eye image and the right-eye to output image signals. In the meantime, the common sub-images in state 3 can be observed by both eyeglass lenses of the polarization glasses.

In yet another embodiment, as illustrated in FIG. 6D, when naked-eye stereoscopic image technologies (e.g. parallax barriers), active lenses, or direct backlight is used in the stereoscopic image display apparatus 500, the left-eye image (e.g. state 1) and the right-eye image (e.g. state 2) are at their original operation modes, and the common sub-image in state 3 is applied in the two-dimensional mode of the naked-eye stereoscopic image display apparatus. Specifically, for the naked-eye three-dimensional display using parallax barriers, the state control unit 502 can be regarded as the controller of the parallax barriers. When receiving the state signal indicating state 3, the state control unit 502 will control the parallax barriers to switch to the two-dimensional viewing mode and output signals for viewing in the two-dimensional mode. In another embodiment, for the naked-eye three-dimensional display, the state control unit 502 can be regarded as the controller of the active lenses. When receiving the state signal indicating state 1, the state control unit 502 will adjust the angle of lenses, so that the light can pass through the active lenses in state 1 to the left eye (i.e. only the left-eye images are displayed). When receiving the state signal indicating state 2, the state control unit 502 will adjust the angle of lenses, so that the light can pass through the active lenses in state 1 to the right eye (i.e. only the right-eye images are displayed). When receiving the state signal indicating state 3, the state control unit 502 will adjust the angle of the lenses, so that the light can pass through the active lenses to both the left eye and the right eye simultaneously (i.e. both the left-eye image and the right-eye image are displayed), so that the naked-eye stereoscopic image display apparatus can switch to the two-dimensional viewing mode and output signals for viewing in the two-dimensional mode. In yet another embodiment, for the naked-eye three-dimensional display using direct backlight modules, the state control unit 502 can be regarded as the controller of the direct backlight module (i.e. active light directing layer). When receiving the state signals indicating state 1 and 2, the state control unit 502 will activate the left backlight sub-module and the right backlight sub-module in the direct backlight module, so that the left-eye image and the right-eye image can be received by the two eyes, respectively, when it is in the three-dimensional mode of the direct backlight module. When receiving the state signal indicating state 3, the state control unit 502 will control the left backlight sub-module and the right backlight sub-module in the direct backlight module to open simultaneously, so that the naked-eye stereoscopic image display apparatus can switch to the two-dimensional viewing mode and output signals for the two-dimensional mode, and thus the left-eye image and the right-eye image can be received by the two eyes simultaneously. The aforementioned embodiments are various applications of the stereoscopic image display apparatus, and the invention is not limited thereto.

The state signal indicating state 3 for the common sub-image should be collocated with a corresponding stereoscopic image display apparatus. Display technologies such as LCD, plasma, or OLED can be used in the stereoscopic image display apparatus. An LCD display may be collocated with an active polarizer, and the display, which does not use polarization, should be collocated with the back polarization sheets. The active polarizer in the three-dimensional LCD display is a liquid crystal rotation layer, and a phase delay unit and a polarizer are placed on the opposite sides of the active polarizer separately, as illustrated in FIG. 1. The active polarizer in the invention is designed so that the pure left-eye image and the pure right-eye image can only be observed by the left eye and the right eye, respectively, and the common sub-image or the identical left-eye/right-eye images can be observed by both two eyes. The phase delay unit is designed for delaying linear polarization to circular polarization to improve the viewing angle of the stereoscopic image display apparatus for the user. The back polarizer is designed to prevent the light leakage which may cause the crosstalk of the image signals of the left-eye/right-eye images. Also, the design of the active polarizer should be collocated with the original polarization property of the display panel and the stereoscopic glasses. The stereoscopic glasses with circular polarization or linear polarization are prior technologies, and details will not be described here. In another embodiment, the parallax barriers, active lenses, the direct backlight module, or the active polarizer can be generally regarded as an "active light control layer", which control light by various ways to display the left-eye image on the left eye, display the right-eye image on the right eye, and display the common sub-image on the two eyes to accomplish stereoscopic visual effects.

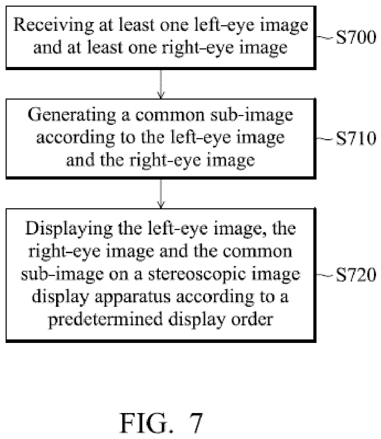

The stereoscopic image display apparatus described in the aforementioned embodiments can be use in the stereoscopic image display method of the invention, which may display the images according to a predetermined display order (e.g. L*→S→R*→S→L* →S, or L*→S→R*→L*→S→R*). The flow chart of the stereoscopic image display method is illustrated in FIG. 7. In step S700, the common state generator 201 may receive at least one left-eye image and at least one right-eye image. In step S710, the common state generator 201 may generate a common sub-image according to the left-eye image and the right-eye image, wherein the aforementioned embodiments can be referenced for calculation of the common sub-image. In step S720, the common state generator 201 may display the left-eye image, the right-eye image and the common sub-image on a stereoscopic image display apparatus according to a predetermined display order (e.g. L*→S→R*→S→L*→S, or L*→S→ R*→L*→S→R*).

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

**Claims**

1. A stereoscopic image display method for use in a stereoscopic image display apparatus (520) comprising a pair of shutter glasses having a left eyeglass lens and a right eyeglass lens, the method comprising:

    receiving stereoscopic information;
    generating a left-eye image, a right-eye image and a common sub-image according to the stereoscopic information, wherein the method is **characterized in that** the common sub-image is an intersection of the left-eye image and the right-eye image where the left-eye image and the right-eye image have almost no parallax, and the method further comprises:

    displaying the left-eye image, the right-eye image, and the common sub-image on the stereoscopic image display apparatus according to a predetermined display order; activating only the left eyeglass lens to observe the left-eye image when the stereoscopic image display apparatus displays the left-eye image;
    activating only the right eyeglass lens to observe the left-eye image when the stereoscopic image display apparatus displays the right-eye image; and activating both the left eyeglass lens and the right eyeglass lens to observe the common sub-image when the stereoscopic image display apparatus displays the common sub-image; wherein

    the predetermined display order is the left-eye image, the common sub-image, the right-eye image, and then the common sub-image; or the predetermined display order is the left-eye image, the common sub-image, and then the right-eye image.

2. The stereoscopic image display method as claimed in claim 1, further comprising:
    calculating a feature value of the left-eye image and the right-eye image, and determining that a sub-image having the feature value is a part of the common sub-image when the feature value is less than a predetermined value, wherein the feature value comprises at least one of a difference value of luminance, a brightness value, and a color difference value.

3. The stereoscopic image display method as claimed in claim 1, wherein the stereoscopic information further comprises a two-dimensional image and a corresponding depth image comprising a plurality of depth values, and the step of generating the common sub-image further comprises:

    generating the left-eye image and the right-eye image according to the two-dimensional image and the depth image; and
    determining that the left-eye image and the right-eye image are within a specific depth range of the plurality of depth values as the common sub-image.

4. The stereoscopic image display method as claimed in claim 1, further comprising:

    applying a first image profile to the left-eye image and the right-eye image; and

applying a second image profile to the common sub-image.

5. The stereoscopic image display method as claimed in claim 1, after the step of generating the common sub-image further comprising:

  generating a state signal to indicate a first state, a second state, and a third state for the left-eye image, the right-eye image, and the common sub-image, respectively, wherein the state signal corresponds to the predetermined display order; and

  using the state signal to control an active light control layer of the stereoscopic image display apparatus, wherein the active light control layer comprises an active light directing layer, an active polarizer, or a direct backlight module.

6. A display timing controller (510) for use in a stereoscopic image display apparatus (520) comprising a pair of shutter glasses having a left eyeglass lens and a right eyeglass lens, the display timing controller (510) comprising:

  a common state generator (201), arranged for receiving stereoscopic information, and for generating a left-eye image, a right-eye image and a common sub-image, wherein the display timing controller is **characterized in that** the common sub-image comprises an intersection of the left-eye image and the right-eye image where the left-eye image and the right-eye image have almost no parallax; and

  an image control unit (501), arranged for displaying the left-eye image, the right-eye image and the common sub-image on the stereoscopic image display apparatus (520) according to a predetermined display order,

  wherein the display timing controller (510) activates only the left eyeglass lens to observe the left-eye image when the stereoscopic image display apparatus displays the left-eye image,

  wherein the display timing controller (510) activates only the right eyeglass lens to observe the left-eye image when the stereoscopic image display apparatus displays the right-eye image,

  wherein the display timing controller (510) activates both the left eyeglass lens and the right eyeglass lens to observe the common sub-image when the stereoscopic image display apparatus displays the common sub-image,

  wherein the predetermined display order is the left-eye image, the common sub-image, the right-eye image, and then the common sub-image; or the predetermined display order is the left-eye image, the common sub-image, and then the right-eye image.

7. The display timing controller as claimed in claim 6, wherein the common state generator is further arranged for calculating a feature value of the left-eye image and the right-eye image, and determining that a sub-image having the feature value is a part of the common sub-image when the feature value is smaller than a predetermined value, wherein the feature value comprises at least one of a difference value of luminance, a brightness value, and a color difference value.

8. The display timing controller as claimed in claim 8, wherein the common state generator is further arranged for receiving a depth image with a plurality of depth values corresponding to the left-eye image and the right-eye image, and determining that the left-eye image and the right-eye image are within a specific depth range within the plurality of depth values as the common sub-image.

9. The display timing controller as claimed in claim 8, wherein the common state generator is further arranged for applying a first image profile to the left-eye image and the right-eye image, and applying a second image profile to the common sub-image.

10. The display timing controller as claimed in claim 8, further comprising:
  a state control unit, arranged for generating a state signal to indicate a first state, a second state, and a third state for the left-eye image, the right-eye image, and the common sub-image, respectively, wherein the state signal corresponds to the predetermined display order, and the state control unit is further arranged for using the state signal to control an active light control layer of the stereoscopic image display apparatus, wherein the active light control layer comprises an active light directing layer, an active polarizer, or a direct backlight module.

**Patentansprüche**

1. Stereoskopisches Bildanzeigeverfahren zur Verwendung in einer stereoskopischen Bildanzeigevorrichtung (520), mit einer Shutterbrille mit einer linken Brillenlinse und einer rechten Brillenlinse, wobei das Verfahren die Schritte aufweist:

  Empfangen stereoskopischer Information;
  Erzeugen eines Bildes für ein linkes Auge, eines Bildes für ein rechtes Auge und eines gemeinsamen Teilbildes gemäß der stereoskopischen Information, wobei das Verfahren **dadurch gekennzeichnet ist, dass** das gemeinsame Teilbild ein Schnittbild des Bildes für das linke Auge und des Bildes für das rechte Auge ist, wobei das Bild für das linke Auge und das Bild für das rechte Auge nahezu keine Parallaxe aufweisen, und wobei das Verfahren ferner die Schritte aufweist:

Anzeigen des Bildes für das linke Auge, des Bildes für das rechte Auge und des gemeinsamen Teilbildes auf der stereoskopischen Bildanzeigevorrichtung gemäß einer vorgegebenen Anzeigefolge;
Aktivieren nur der linken Brillenlinse, um das Bild für das linke Auge zu betrachten, wenn die stereoskopische Bildanzeigevorrichtung das Bild für das linke Auge anzeigt;
Aktivieren nur der rechten Brillenlinse, um das Bild für das rechte Auge zu betrachten, wenn die stereoskopische Bildanzeigevorrichtung das Bild für das rechte Auge anzeigt; und
Aktivieren sowohl der linken Brillenlinse als auch der rechten Brillenlinse, um das gemeinsame Teilbild zu betrachten, wenn die stereoskopische Bildanzeigevorrichtung das gemeinsame Teilbild anzeigt, wobei die vorgegebene Anzeigefolge ist: das Bild für das linke Auge, das gemeinsames Teilbild, das Bild für das rechte Auge und dann das gemeinsame Teilbild, oder wobei die vorgegebene Anzeigefolge ist: das Bild für das linke Auge, das gemeinsame Teilbild und dann das Bild für das rechte Auge.

2. Stereoskopisches Bildanzeigeverfahren nach Anspruch 1, ferner mit dem Schritt zum Berechnen eines Merkmalswerts des Bildes für das linke Auge und des Bildes für das rechte Auge und Bestimmen, dass ein Teilbild, das den Merkmalswert aufweist, Teil des gemeinsamen Teilbildes ist, wenn der Merkmalswert kleiner ist als ein vorgegebener Wert, wobei der Merkmalswert mindestens ein Wert unter einem Leuchtdichtedifferenzwert, einem Helligkeitswert und einem Farbdifferenzwert ist.

3. Stereoskopisches Bildanzeigeverfahren nach Anspruch 1, wobei die stereoskopische Information ferner ein zweidimensionales Bild und ein entsprechendes Tiefenbild aufweist, das mehrere Tiefenwerte enthält, und wobei der Schritt zum Erzeugen des gemeinsamen Teilbildes ferner aufweist:

Erzeugen des Bildes für das linke Auge und des Bildes für das rechte Auge gemäß dem zweidimensionalen Bild und dem Tiefenbild; und
Bestimmen von Bildbereichen des Bildes für das linke Auge und des Bildes für das rechte Auge, die innerhalb eines bestimmten Tiefenbereichs der mehreren Tiefenwerte liegen, als das gemeinsame Teilbild.

4. Stereoskopisches Bildanzeigeverfahren nach Anspruch 1, ferner mit den Schritten:

Anwenden eines ersten Bildprofils auf das Bild für das linke Auge und auf das Bild für das rechte Auge; und
Anwenden eines zweiten Bildprofils auf das gemeinsame Teilbild.

5. Stereoskopisches Bildanzeigeverfahren nach Anspruch 1, ferner mit den folgenden Schritten nach dem Schritt zum Erzeugen des gemeinsamen Teilbildes:

Erzeugen eines Zustandssignals zum Anzeigen eines ersten Zustands, eines zweiten Zustands und eines dritten Zustands für das Bild für das linke Auge, das Bild für das rechte Auge und das gemeinsame Teilbild, wobei das Zustandssignal der vorgegebenen Anzeigefolge entspricht; und
Verwenden des Zustandssignals zum Steuern einer aktiven Lichtsteuerschicht der stereoskopischen Bildanzeigevorrichtung, wobei die aktive Lichtsteuerschicht eine aktive Lichtführungsschicht, einen aktiven Polarisator oder ein direktes Hintergrundbeleuchtungsmodul aufweist.

6. Anzeigezeitsteuereinheit (510) zur Verwendung in einer stereoskopischen Bildanzeigevorrichtung (520), die eine Shutterbrille mit einer linken Brillenlinse und einer rechten Brillenlinse aufweist, wobei die Anzeigezeitsteuereinheit (510) aufweist:

eine Einrichtung (201) zum Erzeugen eines gemeinsamen Zustands, die dazu eingerichtet ist, stereoskopische Information zu empfangen und ein Bild für das linke Auge, ein Bild für das rechte Auge und ein gemeinsames Teilbild zu erzeugen, wobei die Anzeigezeitsteuereinheit **dadurch gekennzeichnet ist, dass** das gemeinsame Teilbild ein Schnittbild des Bildes für das linke Auge und des Bildes für das rechte Auge aufweist, wobei das Bild für das linke Auge und das Bild für das rechte Auge nahezu keine Parallaxe aufweisen; und
eine Bildsteuereinheit (501), die dazu eingerichtet ist, das Bild für das linke Auge, das Bild für das rechte Auge und das gemeinsame Teilbild auf der stereoskopischen Bildanzeigevorrichtung (520) gemäß einer vorgegebenen Anzeigefolge anzuzeigen,
wobei die Anzeigezeitsteuereinheit (510) nur die linke Brillenlinse aktiviert, um das Bild für das linke Auge zu betrachten, wenn die stereoskopische Bildanzeigevorrichtung das Bild für das linke Auge anzeigt,
wobei die Anzeigezeitsteuereinheit (510) nur die rechte Brillenlinse aktiviert, um das Bild für das rechte Auge zu betrachten, wenn die stereoskopische Bildanzeigevorrichtung das Bild für das rechte Auge anzeigt,

wobei die Anzeigezeitsteuereinheit (510) sowohl die linke Brillenlinse als auch die rechte Brillenlinse aktiviert, um das gemeinsame Teilbild zu betrachten, wenn die stereoskopische Bildanzeigevorrichtung das gemeinsame Teilbild anzeigt, und

wobei die vorgegebene Anzeigefolge ist: das Bild für das linke Auge, das gemeinsame Teilbild, das Bild für das rechte Auge und dann das gemeinsame Teilbild, oder wobei die vorgegebene Anzeigefolge ist: das Bild für das linke Auge, das gemeinsame Teilbild und dann das Bild für das rechte Auge.

7. Anzeigezeitsteuereinheit nach Anspruch 6, wobei die Einrichtung zum Erzeugen eines gemeinsamen Zustands ferner dazu eingerichtet ist, einen Merkmalswert des Bildes für das linke Auge und des Bildes für das rechte Auge zu berechnen und zu bestimmen, dass ein Teilbild, das den Merkmalswert aufweist, Teil des gemeinsamen Teilbildes ist, wenn der Merkmalswert kleiner ist als ein vorgegebener Wert, wobei der Merkmalswert mindestens ein Wert unter einem Leuchtdichtedifferenzwert, einem Helligkeitswert und einem Farbdifferenzwert ist.

8. Anzeigezeitsteuereinheit nach Anspruch 8, wobei die Einrichtung zum Erzeugen eines gemeinsamen Zustands ferner dazu eingerichtet ist, ein Tiefenbild mit mehreren Tiefenwerten zu empfangen, die dem Bild für das linke Auge und dem Bild für das rechte Auge entsprechen, und einen Bildbereich des Bildes für das linke Auge und des Bildes für das rechte Auge, die innerhalb eines bestimmten Tiefenbereichs der mehreren Tiefenwerte liegen, als das gemeinsame Teilbild zu bestimmen.

9. Anzeigezeitsteuereinheit nach Anspruch 8, wobei die Einrichtung zum Erzeugen eines gemeinsamen Zustands ferner dazu eingerichtet ist, ein erstes Bildprofil auf das Bild für das linke Auge und das Bild für das rechte Auge anzuwenden und ein zweites Bildprofil auf das gemeinsame Teilbild anzuwenden.

10. Anzeigezeitsteuereinheit nach Anspruch 8, ferner mit:

einer Zustandssteuereinheit, die dazu eingerichtet ist, ein Zustandssignal zum Anzeigen eines ersten Zustands, eines zweiten Zustands und eines dritten Zustands für das Bild für das linke Auge, das Bild für das rechte Auge und das gemeinsame Teilbild zu erzeugen, wobei das Zustandssignal der vorgegebenen Anzeigefolge entspricht, und wobei die Zustandssteuereinheit ferner dazu eingerichtet ist, das Zustandssignal zu verwenden, um eine aktive Lichtsteuerschicht der stereoskopischen Bildanzeigevorrichtung zu steuern, wobei die aktive Lichtsteuerschicht eine aktive Lichtführungsschicht, einen aktiven Polarisator oder ein direktes Hintergrundbeleuchtungsmodul aufweist.

## Revendications

1. Procédé d'affichage d'images stéréoscopiques destiné à l'utilisation dans un appareil d'affichage d'images stéréoscopiques (520) comprenant une paire de lunettes à obturateur ayant une lentille de verre gauche et une lentille de verre droit, le procédé comprenant ;

la réception d'une information stéréoscopique ;

la génération d'une image d'oeil gauche, d'une image d'oeil droit et d'une image

secondaire commune en fonction de l'information stéréoscopique, où le procédé est **caractérisé en ce que** l'image secondaire commune est une intersection de l'image de l'oeil gauche et de l'image de l'oeil droit, où l'image de l'oeil gauche et l'image de l'oeil droit n'ont presque aucune parallaxe, et le procédé comprend en outre :

l'affichage de l'image de l'oeil gauche, de l'image de l'oeil droit et de l'image

secondaire commune sur l'appareil d'affichage d'images stéréoscopiques en fonction d'un ordre d'affichage prédéterminé ;

l'activation uniquement de la lentille du verre de l'oeil gauche pour observer

l'image de l'oeil gauche lorsque l'appareil d'affichage d'images stéréoscopiques affiche l'image de l'oeil gauche ;

l'activation uniquement de la lentille du verre de l'oeil droit pour observer l'image

de l'oeil droit lorsque l'appareil d'affichage d'images stéréoscopiques affiche l'image de l'oeil droit ; et

l'activation à la fois de la lentille de verre d'oeil gauche et de la lentille de verre

d'oeil droit pour observer l'image secondaire commune lorsque l'appareil d'affichage d'images stéréoscopiques affiche l'image secondaire commune ; où

l'ordre d'affichage prédéterminé est l'image de l'oeil gauche, l'image secondaire

commune, l'image de l'oeil droit, et ensuite l'image secondaire commune ; ou l'ordre d'affichage prédéterminé est l'image de l'oeil gauche, l'image secondaire commune, et ensuite l'image de l'oeil droit.

2. Procédé d'affichage d'images stéréoscopiques selon la revendication 1, comprenant en outre :

le calcul d'une valeur caractéristique de l'image de l'oeil gauche et de l'image de l'oeil droit, et la détermination qu'une image secondaire ayant la valeur caractéristique est une partie de l'image secondaire commune lorsque la valeur caractéristique est inférieure à une valeur prédéterminée, où la valeur caractéristique comprend au moins une valeur parmi une valeur de différence de luminance, une valeur de brillance et une valeur de différence de couleur.

3. Procédé d'affichage d'images stéréoscopiques selon la revendication 1, dans lequel l'information stéréoscopique comprend en outre une image bidimensionnelle et une image de profondeur correspondante comprenant une pluralité de valeurs de profondeurs et l'étape de génération de l'image secondaire commune comprend en outre :

la génération de l'image de l'oeil gauche et de l'image de l'oeil droit en fonction de l'image bidimensionnelle et de l'image de profondeur ; et la détermination que l'image de l'oeil gauche et que l'image de l'oeil droit sont dans une plage de profondeur spécifique parmi la pluralité des valeurs de profondeur en tant qu'image secondaire commune.

4. Procédé d'affichage d'images stéréoscopiques selon la revendication 1, comprenant en outre :

l'application d'un premier profil d'image à l'image de l'oeil gauche et à l'image de l'oeil droit ; et l'application d'un second profil d'image à l'image secondaire commune.

5. Procédé d'affichage d'images stéréoscopiques selon la revendication 1, après l'étape de génération, l'image secondaire commune comprenant en outre :

la génération d'un signal d'état pour indiquer un premier état, un deuxième état, et un troisième état pour l'image de l'oeil gauche, l'image de l'oeil droit et l'image secondaire, respectivement, où le signal d'état correspond à un ordre d'affichage prédéterminé ; et l'utilisation du signal d'état pour commander une couche de commande de lumière active de l'appareil d'affichage d'images stéréoscopiques, où la couche de commande de lumière active comprend une couche d'orientation de la lumière active, un polariseur actif ou un module de rétroéclairage direct.

6. Système de commande du temps d'affichage (510) pour l'utilisation dans un appareil d'affichage d'images stéréoscopiques (520) comprenant une paire de lunettes à obturateur ayant une lentille de verre de lunette gauche et une lentille de verre de lunette droite, le système de commande de temps d'affichage (510) comprenant :

un générateur d'état commun (201), agencé pour recevoir une information stéréoscopique, et pour générer une image d'oeil gauche, une image d'oeil droit et une image secondaire commune, où le système de commande de temps d'affichage est **caractérisé en ce que** l'image secondaire commune comprend une intersection de l'image de l'oeil gauche et de l'image de l'oeil droit, où l'image de l'oeil gauche et l'image de l'oeil droit n'ont pratiquement aucune parallaxe ; et

une unité de commande d'image (501), agencée pour afficher l'image de l'oeil gauche, l'image de l'oeil droit et l'image secondaire commune sur l'appareil d'affichage d'images stéréoscopiques (520) en fonction d'un ordre d'affichage prédéterminé, où le système de commande de temps d'affichage (510) active uniquement la lentille de verre de gauche pour observer l'image de l'oeil gauche lorsque l'appareil d'affichage d'images stéréoscopiques affiche l'image de l'oeil gauche, où le système de commande de temps d'affichage (510) active uniquement la lentille de verre de lunette droite pour observer l'image de l'oeil gauche lorsque l'appareil d'affichage d'images stéréoscopiques affiche l'image de l'oeil droit, où le système de commande de temps d'affichage (510) active à la fois la lentille de verre de lunette gauche et la lentille de verre de lunette droite pour observer l'image secondaire commune lorsque l'appareil d'affichage d'images stéréoscopiques affiche l'image secondaire commune, où l'ordre d'affichage prédéterminé est l'image de l'oeil gauche, l'image secondaire commune, l'image de l'oeil droit et ensuite l'image secondaire commune ; ou l'ordre d'affichage prédéterminé est l'image de l'oeil gauche, l'image secondaire commune et ensuite l'image de l'oeil droit.

7. Système de commande de temps d'affichage selon la revendication 6, dans lequel le générateur d'état commun est en outre agencé pour calculer une valeur caractéristique de l'image de l'oeil gauche et de l'image de l'oeil droit, et déterminer qu'une image secondaire ayant la valeur caractéristique est une partie de l'image secondaire commune lorsque la valeur caractéristique est inférieure à une valeur prédéterminée, où la valeur caractéristique comprend au moins une valeur parmi une valeur de différence de luminance, une valeur de brillance et une valeur de différence de couleur.

8. Système de commande de temps d'affichage selon la revendication 8, dans lequel le générateur d'état commun est en outre agencé pour recevoir une image de profondeur avec une pluralité de valeurs de profondeurs correspondant à l'image de l'oeil gauche et à l'image de l'oeil droit, et déterminer que l'image de l'oeil gauche et l'image de l'oeil droit sont dans une plage de profondeur spécifique parmi la pluralité des valeurs de profondeur en tant qu'image secondaire commune.

9. Système de commande de temps d'affichage selon la revendication 8, dans lequel le générateur d'état commun est en outre agencé pour appliquer un premier profil d'image à l'image de l'oeil gauche et à l'image de l'oeil droit, et appliquer un deuxième profil d'image à l'image secondaire commune.

10. Système de commande de temps d'affichage selon la revendication 8, comprenant en outre :
une unité de commande d'état, agencée pour générer un signal d'état pour indiquer un premier état, un deuxième état, et un troisième état pour l'image de l'oeil gauche, l'image de l'oeil droit et l'image secondaire, respectivement, où le signal d'état correspond à un ordre d'affichage prédéterminé, et l'unité de commande d'état est en outre agencée pour utiliser le signal d'état pour commander une couche de commande de lumière active de l'appareil d'affichage d'images stéréoscopiques, où la couche de commande de lumière active comprend une couche d'orientation de la lumière active, un polariseur actif ou un module de rétro-éclairage direct.

FIG. 1

Stereoscopic information

Common state generator ─ 201

Stereoscopic
image

State
signal

FIG. 2A

Left-eye image    Right-eye image

Common state generator    ~201

Yes    The same?    No

State 3    State 1/2

FIG. 2B

Stereoscopic information

Common state generator — 201

Yes ← The same? → No

State 3        State 1/2

FIG. 2C

FIG. 3A

FIG. 3B

FIG. 3C

FIG. 3D

FIG. 3E

FIG. 3F

EP 2 541 948 B1

```
┌────────┐
│ 333    │
│ 111    │ ──────────>  ┌──────┐
│ 311    │              │  1   │
└────────┘              └──────┘
```

FIG. 3G

```
┌────────┐
│ 333    │
│ 133    │ ──────────>  ┌──────┐
│ 333    │              │  1   │
└────────┘              └──────┘
```

FIG. 3H

FIG. 4A

FIG. 4B

```
                    ┌─────────────────────┐
                    │     Image data      │
                    └──────────┬──────────┘
                               │
                               ▼
                            ╱     ╲
              S410 ───    ╱  State 3? ╲    No
                          ╲          ╱ ──────────┐
                            ╲      ╱             │
                               │ Yes            │
                               ▼                ▼
              ┌──────────────────────┐  ┌──────────────────────┐
              │ Using the image      │  │ Using the image      │
              │ profile B            │  │ profile A            │
              └──────────────────────┘  └──────────────────────┘
```

FIG. 4C

Stereoscopic information

500

Display timing controller — 510

Common state generator — 201

Stereoscopic image | State signal

501 — Image control unit | State control unit — 502

Stereoscopic image | State control signal

520 — Display panel | Active light control layer — 530

FIG. 5

EP 2 541 948 B1

FIG. 6A

FIG. 6B

26

FIG. 6C

FIG. 6D

Receiving at least one left-eye image and at least one right-eye image ─ S700

Generating a common sub-image according to the left-eye image and the right-eye image ─ S710

Displaying the left-eye image, the right-eye image and the common sub-image on a stereoscopic image display apparatus according to a predetermined display order ─ S720

FIG. 7

**EP 2 541 948 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 100123015
- US 2011149182 A1
- JP 8331599 A